Europäisches Patentamt

European Patent Office

Office européen des brevets

(19)

Veröffentlichungsnummer **0 134 554**
**A1**

(12)

# EUROPÄISCHE PATENTANMELDUNG

(21) Anmeldenummer **84109631.6**

(22) Anmeldetag: **13.08.84**

(51) Int. Cl⁴ **B 64 F 1/34**

(30) Priorität: **26.08.83 DE 8324475 U**

(43) Veröffentlichungstag der Anmeldung:
**20.03.85 Patentblatt 85/12**

(84) Benannte Vertragsstaaten:
**FR GB IT**

(71) Anmelder: **Licentia Patent-Verwaltungs-GmbH
Theodor-Stern-Kai 1
D-6000 Frankfurt/Main 70(DE)**

(72) Erfinder: **Uhde, Reinhart, Ing. grad.
Sülldorfer Kirchenweg 44
D-2000 Hamburg 55(DE)**

(74) Vertreter: **Lertes, Kurt, Dr. et al,
Licentia Patent-Verwaltungs-GmbH Theodor-Stern-Kai 1
D-6000 Frankfurt/M 70(DE)**

(54) **Frequenzumformer zur Fremdstromversorgung von Flugzeugen.**

(57) Die Anmeldung befasst sich mit der Fremdstromversorgung von Flugzeugen auf Flugplätzen. Die 400 Hz- Bodenstromversorgung wird zum Teil aus ortsfesten Umformer- oder Umrichteranlagen oder mobilen Dieselaggregaten vorgenommen. Die Nachteile dieser Versorgungsanlagen, die in der begrenzten Übertragungsmöglichkeit elektrischer Energie bei zentraler Versorgung und dem relativ hohen Verschleiß der Aggregate gesehen werden, sollen durch den Frequenzumformer (4) nach der Erfindung beseitigt werden. Hierfür wird ein aus dem Flughafennetz (5) gespeister, aus einem Drehstrom-Asynchronmotor in zweipoliger Bauartmit einstufigem Getriebe und einem achtpoligen bürstenlosen Synchrongenerator bestehender Maschinensatz verwendet, der hermetisch gekapselt und sprühölgekühlt ist. Schalt- und Anzeigegeräte sind im Umbaugehäuse angeordnet. Der Umformer (4) wird unmittelbar über Steckverbindungen (10) an dem zu versorgenden Flugzeug (1) eingesetzt.

FIG.1

EP 0 134 554 A1

Licentia Patent-Verwaltungs-GmbH          PTL-HH/Sa/mar
Theodor-Stern-Kai 1                       HH 83/13 Gbm
D-6000 Frankfurt 70


"Frequenzumformer zur Fremdstromversorgung von Flugzeugen"

Die Neuerung befasst sich mit einem Frequenzumformer nach den
Merkmalen des Oberbegriffs des Hauptanspruches.

Für die Stromversorgung von Flugzeugen während eines Zwischenstopps und in den Abstellzeiten wird zunehmend eine Fremdspeisung in Anspruch genommen, um den Auflagen des Umweltschutzes gerecht zu werden. Die 400 Hz-Bodenstromversorgung
wird heute zum Teil aus ortsfesten Umformer- oder Umrichteranlagen oder mobilen Dieselaggregaten vorgenommen. Diese
Aggregate unterliegen aber systembedingt einem relativ hohen
Verschleiß. Umformer-/Umrichteranlagen können zentral oder
dezentral aufgestellt werden, wobei aus Gründen der Leistungsübertragung der zentralen Versorgung physikalische Grenzen in
der Übertragungsmöglichkeit elektrischer Energie gesetzt sind.

Wo auf bestehenden und neuen Flughäfen derartige Stromversorgungseinrichtungen eingesetzt werden, wird häufig gefordert,
daß diese klein und leicht sein sollen und sich somit einfach
in vorhandene Einrichtungen nahe dem Vorfeld einfügen lassen.

Der Neuerung liegt daher die Aufgabe zugrunde, einen Frequenzumformer der eingangs beschriebenen Art zu schaffen, der sich
als komplettes Gerät ohne Eingriffe in die bestehende Infrastruktur einpasst.

Diese Aufgabe wird neuerungsgemäß durch die im Kennzeichen des
Hauptanspruches angegebenen Merkmale gelöst.

Der Umformer nach der Neuerung zur Versorgung von Flugzeugen
am Boden mit 400 Hz-Drehstrom ist in besonderer Weise zum Anbau
an Fluggastbrücken oder an Gebäuden geeignet, in die diese integriert sind. Der Umformer kann außerdem auf einen Hänger gestellt und überall dort eingesetzt werden, wo eine geeignete
Energieversorgung aus dem Flughafennetz vorhanden ist. Das Gerät
ist vollständig mit allen notwendigen Schalt- und Überwachungsgeräten ausgerüstet und wird lediglich am bestehenden 50 (60) Hz-
Netz steckbar angeschlossen. Der sprühölgekühlte Maschinensatz
und alle übrigen Bauteile sind hermetisch geschlossen und damit
in einem großen Bereich klimatischer Bedingungen einsetzbar.

Weiterhin zeichnet den Umformer aus, daß er weit unter den heute
bekannten Auflagen hinsichtlich Geräuscherzeugung und Umweltbelastung liegt. Durch den Einsatz modernster Luftfahrttechnologie konnte das Gewicht des Umformers auf etwa 1/4 des Gewichtes
heute bekannter Geräte gesenkt werden.

In der Zeichnung ist ein Ausführungsbeispiel nach der Erfindung
dargestellt. Es zeigt
Fig. 1 den Einsatz des Frequenzumformers unterhalb einer Fluggastbrücke und
Fig. 2 schematisch die Anschlußmöglichkeiten des Umformers.

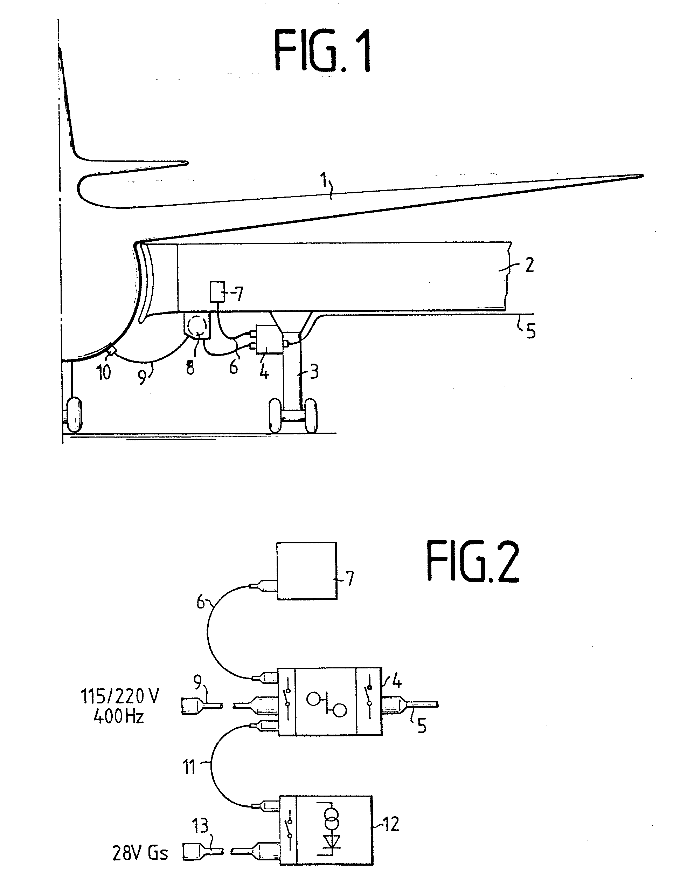

In Figur 1 ist ein Flugzeug 1 dargestellt, welches an eine Fluggastbrücke 2 angedockt wurde. Unterhalb der Fluggastbrücke 2
ist, gegebenenfalls an einer Abstützung 3, der Umformer 4 angebracht. Da er leicht ist und kleine bauliche Abmessungen aufweist, kann er ohne nachträgliche konstruktive Änderungen der Brücke an dieser befestigt werden. Der Umformer 4 ist über eine steckbare 50 (60) Hz-Zuleitung 5 an das bestehende Flughafennetz angeschlossen. Ferner kann eine steckbare Leitung 6 den Umformer 4 mit einem Fernbediengerät 7 in der Fluggastbrücke verbinden, um zentral sowohl die Antriebe der Fluggastbrücke 2 als auch den Umformer 4 betätigen zu können. Schließlich ist der Umformer 4, gegebenenfalls über eine Kabelaufwickelvorrichtung 8 über eine steckbare 400 Hz-Zuleitung 9 mit einer Steckvorrichtung 10 für die Fremdstromversorgung am Flugzeug 1 verbunden.

In der schematischen Darstellung der Figur 2 sind die bisher erwähnten Teile der Versorgungseinrichtung mit denselben Bezugszeichen versehen. Der Umformer 4 ist ein hermetisch abgeschlossener und sprühölgekühlter Maschinensatz, der einen Drehstrom-Asynchronmotor in zweipoliger Ausführung mit nachgeschaltetem einstufigem Getriebe aufweist, welches einen 8-poligen bürstenlosen Synchrongenerator antreibt. Der Ölkreislauf für das Sprühöl ist in sich geschlossen und mit Ölpumpe, Filter und Kühler ausgerüstet. Die Sprühölkühlung ist eine in Luftfahrzeugen eingeführte und ausgereifte Technik, die einen konstruktiv einfachen Aufbau der Maschinen gestattet, wobei eine sehr intensive Kühlung der Maschinen erreicht wird. Da der Maschinensatz vollständig gekapselt ist, kann der Umformer 4 bei praktisch allen Umweltbedingungen eingesetzt werden. Schaltgeräte mit Regler-Einheit sowie eventuell vorgesehene Anzeigegeräte werden im Umbaugehäuse des Umformers angeordnet, so daß dieser anschlußfertig einsetzbar ist. Zur Überwachung der Funktion des Umformers 4 können Einrichtungen für Überspannung, Unterspannung, Unterfrequenz und Überlast vorgesehen sein.

Wenn anstelle der üblichen Drehstromverbraucher ein Gleichstrom-Flugzeug an die Stromversorgung anzuschließen ist, so wird an

0134554

den Umformer 4 über eine steckbare Zuleitung 11 ein Transformator-Gleichrichter-Gerät 12 angeschaltet, aus dem über eine Leitung 13 der Gleichstromverbraucher versorgt wird.

Licentia Patent-Verwaltungs-GmbH          PTL-HH/Sa/mar
Theodor-Stern-Kai 1                        HH 83/13 Gbm

6000 Frankfurt 70


SCHUTZANSPRÜCHE


1. Frequenzumformer für die Fremdstromversorgung von Flugzeugen am Boden, dadurch gekennzeichnet, daß ein aus dem Flughafennetz gespeister, aus einem Drehstrom-Asynchronmotor in zweipoliger Bauart mit einstufigem Getriebe und einem 8-poligen bürstenlosen Synchrongenerator bestehender Maschinensatz (4) hermetisch gekapselt und sprühölgekühlt ist, daß die Schalt- und Anzeigegeräte im Umbaugehäuse angeordnet sind, und daß der Umformer unmittelbar über Steckverbindungen (10) an dem zu versorgenden Flugzeug (1) einsetzbar ist.


2. Frequenzumformer nach Anspruch 1, dadurch gekennzeichnet, daß der Umformer an oder unter einer Fluggastbrücke anbringbar und vom Zentralsteuerstand (7) der Brücke fernbedienbar ist.


3. Frequenzumformer nach Anspruch 1 zur Stromversorgung von Gleichstromverbrauchern, dadurch gekennzeichnet, daß an dem Maschinensatz (4) ein Transformator-Gleichrichtergerät (12) über eine Steckvorrichtung (11) anbringbar ist.

# FIG.1

# FIG.2

115/220 V
400 Hz

28V Gs

Europäisches
Patentamt

**EUROPÄISCHER RECHERCHENBERICHT**

0134554
Nummer der Anmeldung

EP 84 10 9631

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | GB-A- 728 473 (K. KRAUSS) <br> * Seite 2, Zeilen 24-49; Figur 2 * <br><br> --- | 1,2 | B 64 F 1/34 |
| Y | TECHNISCHE RUNDSCHAU, Band 69, Nr. 5, Februar 1977, Seite 13, Hallwag Verlag, Bern, CH; L. SPENGLER: "Flugzeug-Stromversorgungsanlage" * Insgesamt * <br><br> --- | 1,2 | |
| A | CH-A- 229 941 (LICENTIA PATENT-VERWALTUNGS-GmbH) <br><br> --- | | |
| A | US-A-4 378 587 (McCLAIN et al.) <br><br> --- | | RECHERCHIERTE SACHGEBIETE (Int. Cl.4) |
| A | DE-A- 870 134 (ROBERT BOSCH) <br><br> --- | | B 64 F <br> H 02 K |
| A | BE-A- 516 646 (A. RAVA) <br><br> ----- | | |

Der vorliegende Recherchenbericht wurde für alle Patentansprüche erstellt.

| Recherchenort | Abschlußdatum der Recherche | Prüfer |
|---|---|---|
| DEN HAAG | 31-10-1984 | MARTINOZZI G.M.E. |

EPA Form 1503 03 82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument